# EUROPÄISCHE PATENTSCHRIFT

(11) **EP 0 365 891 B1**
(45) Veröffentlichungstag und Bekanntmachung des Hinweises auf die Patenterteilung: **17.05.1995**
(21) Anmeldenummer: 89118556.3
(22) Anmeldetag: 06.10.1989
(51) Int. Cl.: G11B 11/10, G11B 5/00, H01F 7/18

(54) **Schaltungsanordnung zur magnetischen oder magneto-optischen Aufzeichnung von Daten auf einem Datenträger**
Circuit for magnetic or magneto-optical recording of data on a recording medium
Circuit pour l'enregistrement de données magnétiques ou magnéto-optiques sur un support d'enregistrement

(30) Priorität: 22.10.1988 DE 3836125
(43) Veröffentlichungstag der Anmeldung: 02.05.1990
(73) Patentinhaber: Deutsche Thomson-Brandt GmbH, 78003 Villingen-Schwenningen (DE)
(72) Erfinder: Zucker, Friedhelm, D-7733 Mönchweiler (DE); Büchler, Christian, F-7730 VS-Marbach (DE)

(56) Entgegenhaltungen:
- EP-A- 0 164 745
- CH-A- 395 251
- DE-A- 1 588 178
- DE-A- 3 510 620
- GB-A- 2 101 792
- US-A- 4 750 159
- International Rectifier Hexfet Designers Manual, Fourth Edition, First Printing, 09.87, Application note 952, page I-111 to I-117
- Leistungs-Mosfet Praxis, Jens Per Stengl, Jenö Tihanyi; 1985 by Richard Pflaum Verlag Kg, München ISBN 3-7905-0407-6

## Beschreibung

Die Erfindung betrifft eine Schaltungsanordnung zur magnetischen oder magneto-optischen Aufzeichnung von Daten auf einen Datenträger mit einer Reihenschaltung aus einer Induktivität und einer Stromquelle.

Derartige Schaltungsanordnungen werden z.B. in magneto-optischen Aufzeichnungs- und Wiedergabegeräten eingesetzt, um die Magnetisierungsrichtung in der magnetischen Schicht eines magneto-optischen Aufzeichnungsträgers umzukehren.

Ein bekannter magneto-optischer Aufzeichnungsträger ist die magneto-optische Platte, bei der hinter einer lichtdurchlässigen Schicht eine magneto-optische Schicht liegt, auf der Daten aufzeichenbar und von der diese Daten lesbar sind. Es wird zunächst erläutert, wie die Daten auf eine magneto-optische Platte geschrieben werden.

Mittels eines auf die Platte fokussierten Laserstrahls wird die magneto-optische Schicht auf eine Temperatur erhitzt, die in der Nähe der Curie-Temperatur liegt. Meist genügt es jedoch, die magneto-optische Schicht nur etwa bis zur Kompensationstemperatur aufzuheizen, die unter der Curie-Temperatur liegt. Hinter dem Brennpunkt auf der Platte ist ein Elektromagnet angeordnet, der den vom Laserstrahl erhitzten Bereich in die eine oder andere Magnetisierungsrichtung magnetisiert. Weil nach Abschalten des Laserstrahls die erhitzte Stelle wieder unter die Kompensationstemperatur abkühlt, bleibt die vom Elektromagneten festgelegte Magnetisierungsrichtung erhalten. Sie friert sozusagen ein. Auf diese Weise werden die einzelnen Bits in Domänen unterschiedlicher Magnetisierungsrichtung gespeichert. Dabei entspricht z.B. die eine Magnetisierungsrichtung einer Domäne einer logischen Eins, während die entgegengesetzte Magnetisierungsrichtung eine logische Null darstellt.

Zum Lesen der Daten macht man sich den Kerr-Effekt zunutze. Die Polarisationsebene eines linear polarisierten Lichtstrahls wird bei der Reflexion an einem magnetisierten Spiegel um einen meßbaren Winkel gedreht. Je nachdem, in welche Richtung der Spiegel magnetisiert ist, wird die Polarisationsebene des reflektierten Lichtstrahls nach rechts oder links gedreht. Weil aber die einzelnen Domänen auf der Platte wie magnetisierte Spiegel wirken, wird die Polarisationsebene eines abtastenden Lichtstrahls je nach der Magnetisierungsrichtung der gerade abgetasteten Domäne um einen meßbaren Winkel nach links oder rechts gedreht.

Aus der Drehung der Polarisationsebene des von der Platte reflektierten Lichtstrahls erkennt die optische Abtastvorrichtung, welches Bit vorliegt, eine logische Eins oder eine logische Null.

Eine bekannte Lösung, um die magneto-optische Schicht in die eine oder andere Richtung zu magnetisieren, sieht eine als Elektromagnet wirkende Schaltungsanordnung mit einer Spule hinter der magneto-optischen Platte vor. Die Spule ist so zu dimensionieren, daß sie den gesamten Bereich, den die optische Abtastvorrichtung überstreicht, umzumagnetisieren vermag. Dieser Bereich ist je nach Typ des Aufzeichnungs- und Wiedergabegerätes z.B. ein radialer oder kreisbogenförmiger Streifen, der vom Plattenrand zum Plattenmittelpunkt verläuft. Weil die Feldstärke auf dem gesamten Streifen einen Mindestwert erreichen muß, um den Streifen ummagnetisieren zu können, fallen der Querschnitt und damit die Induktivität der Spule relativ groß aus.

Bei einer weiteren bekannten Lösung ist die Spule auf der optischen Abtastvorrichtung befestigt. Die Spule kann z.B. um die Objektivlinse der optischen Abtastvorrichtung gewickelt sein. Weil bei dieser Lösung die Spule zusammen mit der optischen Abtastvorrichtung mittels eines Spurregelkreises entlang den Datenspuren auf der magneto-optischen Platte geführt wird, genügen ein geringerer Querschnitt und somit eine kleinere Induktivität, um dieselbe Mindestfeldstärke zu erzeugen, denn es wird nicht ein radialer oder kreisbogenförmiger Streifen, sondern nur ein kleiner beispielsweise kreisförmiger Bereich mit dem nahezu punktförmigen Laserfleck als Mittelpunkt in der magneto-optischen Schicht ummagnetisiert.

In Leistungs-MOSFET-Praxis; Jens Per Stengl, Jenö Tihanyi; 1985 by Richard Pflaum Verlag KG, München ist ein Gegentaktwandler beschrieben.

Der Mittelpunkt zweier in Mittelpunktsschaltung geschalteter Spulen eines Übertragers ist mit einer Versorgungsspannungsquelle verbunden. Der andere Anschluß jeder der beiden Spulen ist über je einen Schalttransistor mit Masse verbunden. Die beiden Schalttransistoren werden im Gegentakt betrieben.

Es ist daher Aufgabe der Erfindung, eine Schaltungsanordnung mit einer Spule so zu gestalten, daß eine sichere und schnelle Umkehrung des Magnetfeldes erzielt wird.

Die Erfindung, löst diese Aufgabe dadurch, daß eine Spule aus zwei Wicklungen entgegengesetzten Wicklungssinns in Mittelpunktsschaltung aufgebaut ist, daß der Mittelpunkt der beiden Wicklungen über die Reihenschaltung aus der Induktivität und der Stromquelle an einer Versorgungsspannung liegt, daß der freie Anschluß der einen Wicklung über einen ersten steuerbaren Schalter und der freie Anschluß der anderen Wicklung über einen zweiten steuerbaren Schalter auf Bezugspotential liegt und daß der Steuereingang des ersten steuerbaren Schalters mit dem ersten Ausgang und der Steuereingang des zweiten steuerbaren Schalters mit dem zweiten Ausgang einer Ansteuerschaltung verbunden ist.

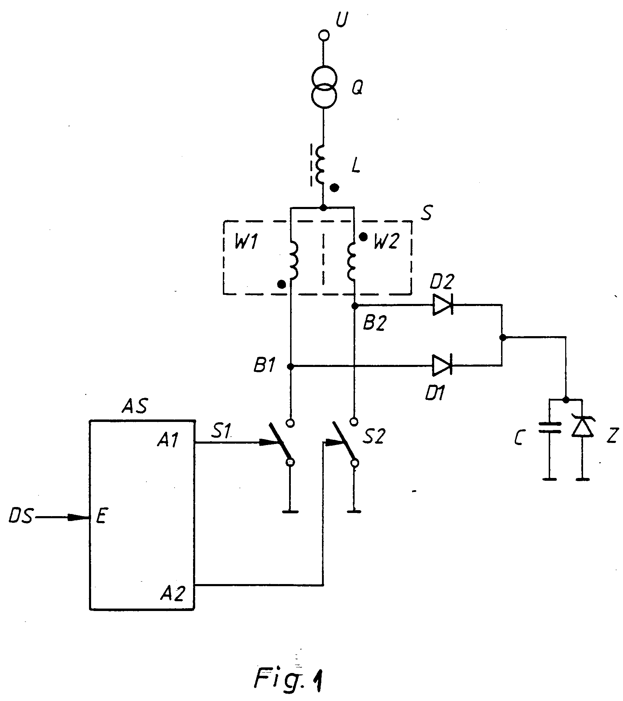

Die Erfindung wird nun anhand des in der Figur gezeigten Ausführungsbeispiels zunächst beschrieben und anschließend erläutert.

Eine bifilar gewickelte Spule S ist aus zwei in Reihe geschalteten Wicklungen W1 und W2 entgegengesetzten Wicklungssinns aufgebaut. Der gemeinsame Verbindungspunkt der beiden Wicklungen W1 und W2 entgegengesetzten Wicklungssinns liegt über eine Reihenschaltung aus einer Induktivität L und einer Stromquelle Q an einer Versorgungsspannung U. Der freie Anschluß B1 der Wicklung W1 liegt über einen steuerbaren Schalter S1 auf Bezugspotential, dessen Steuereingang mit dem ersten Ausgang A1 einer Ansteuerschaltung AS verbunden ist. Ebenso liegt der freie Anschluß B2 der Wicklung W2 über einen steuerbaren Schalter S2 auf Bezugspotential, dessen Steuereingang mit dem zweiten Ausgang A2 der Ansteuerschaltung AS verbunden ist. Der freie Anschluß B1 der Wicklung W1 liegt außerdem über eine Diode D1 und eine in Reihe zur Diode D1 geschaltete Parallelschaltung aus einer Kapazität C und einer Zener-Diode Z auf Bezugspotential. Über eine Diode D2 ist der freie Anschluß B2 der Wicklung W2 mit dem gemeinsamen Anschlußpunkt der Diode D1 und der Parallelschaltung aus der Kapazität C und der Zener-Diode Z verbunden. Dem Eingang E der Ansteuerschaltung AS wird das aufzuzeichnende Datensignal DS zugeführt.

Im Lesebetrieb sind die beiden steuerbaren Schalter S1 und S2 geöffnet. Wenn jedoch Daten auf der magneto-optischen Platte aufgezeichnet werden, wird entweder der steuerbare Schalter S1 oder der steuerbare Schalter S2 von der Ansteuerschaltung AS geschlossen, je nachdem, ob eine logische Eins oder eine logische Null auf der magneto-optischen Platte gespeichert werden soll.

Wenn z.B. eine logische Eins aufgezeichnet wird, schließt die Ansteuerschaltung AS den steuerbaren Schalter S1. Es fließt jetzt ein Strom von der Stromquelle Q über die Induktivität L, die Wicklung W1 und den steuerbaren Schalter S1 nach Bezugspotential. Über die beiden Dioden D1 und D2 kann kein Strom nach Bezugspotential fließen, weil diese beiden Dioden in Sperrichtung gepolt sind. Soll nun eine logische Null aufgezeichnet werden, so öffnet die Ansteuerschaltung AS den steuerbaren Schalter S1, während sie gleichzeitig den steuerbaren Schalter S2 schließt. Weil jetzt bei geschlossenem steuerbaren Schalter S2 ein Strom durch die Wicklung W2 nach Bezugspotential fließt, während die Wicklung W1 stromlos bleibt, wird die Richtung des von der Spule S erzeugten Magnetfeldes umgekehrt.

Wegen der Selbstinduktion der beiden Wicklungen W1 und W2 will sich der Strom in den beiden Wicklungen W1 und W2 aber nur langsam ändern, wenn die beiden steuerbaren Schalter S1 und S2 gegenphasig umgeschaltet werden. Daher wird in dem Augenblick, da die Schalter S1 und S2 umgeschaltet werden und der Stromfluß von der einen Wicklung W1 bzw. W2 in die andere Wicklung W2 bzw. W1 übergehen soll, der Strom durch die Induktivität L nahezu konstant gehalten, so daß der Strom in der einen Wicklung schnell auf den Wert null absinkt, während er gleichzeitig in der anderen Wicklung auf den Endwert ansteigt. Dadurch wird eine schnelle Umkehrung des Magnetfeldes bewirkt.

Versuche haben gezeigt, daß sich ein schneller Wechsel des Stromflusses von der einen Wicklung in die andere erzielen läßt, wenn die Induktivität der Spule L etwa fünf- bis fünfzigmal größer gewählt wird, als die der Wicklungen W1 und W2.

Die beim öffnen des steuerbaren Schalters S1 an der Wicklung W1 entstehende hohe Induktionsspannung wird mittels der Diode D1 und der Parallelschaltung aus der Kapazität C und der Zener-Diode Z auf einen vorgebbaren Wert begrenzt.

Wird der steuerbare Schalter S1 wieder von der Ansteuerschaltung AS geschlossen und der steuerbare Schalter S2 gleichzeitig geöffnet, so wird die an der Wicklung W2 bei diesem Schaltvorgang entstehende Induktionsspannung durch die Diode D2 und die Parallelschaltung aus der Kapazität C und der Zener-Diode Z ebenfalls auf den vorgegebenen Wert begrenzt.

Die Erfindung bietet bei magneto-optischen Aufzeichnungs- und Wiedergabegeräten den Vorteil, daß bereits auf der magneto-optischen Platte aufgezeichnete Daten unmittelbar überschrieben werden können.

Bei bekannten magneto-optischen Aufzeichnungs- und Wiedergabegeräten werden dagegen erst die alten Daten gelöscht, ehe neue Daten aufgezeichnet werden. Zu diesem Zweck wird die magneto-optische Schicht an den Stellen, wo die neuen Daten gespeichert werden sollen, vom Laser auf die Kompensationstemperatur erhitzt. Dadurch werden diese Stellen in die eine Richtung magnetisiert. Die Platte wird initialisiert, wie der Fachausdruck für diesen Vorgang lautet. Anschließend wird die Richtung des in der Spule erzeugten Magnetfeldes wieder umgekehrt.

Zum Aufzeichnen der neuen Daten wird die Laserleistung zwischen einem kleinen und großen Wert in Abhängigkeit vom zu speichernden Bit geschaltet. Wird an der zuvor gelöschten Stelle beispielsweise eine logische Null gespeichert, so arbeitet der Laser mit der kleinen Leistung, damit die Kompensationstemperatur nicht erreicht wird. Zum Aufzeichnen einer logischen Eins erhitzt der Laser dagegen die neu zu beschreibende Strelle auf die Kompensationstemperatur, damit diese Stelle von der Spule ummagnetisiert werden kann. Auf diese umständliche Weise werden Daten auf der magneto-optischen Platte zuerst gelöscht, ehe anschließend die neuen Daten aufgezeichnet werden. Im Gegensatz dazu werden bei der Erfindung die alten Daten einfach von den neuen überschrieben.

Die Erfindung ist nicht nur für magneto-optische Geräte, sondern auch für andere magnetische Aufzeichnungsgeräte geeignet.

## Patentansprüche

1. Schaltungsanordnung zur magnetischen oder magneto-optischen Aufzeichnung von Daten auf einen Datenträger mit einer Reihenschaltung aus einer Induktivität (L) und einer Stromquelle (Q), **dadurch gekennzeichnet,** daß eine Spule (S) aus zwei Wicklungen (W1, W2) entgegengesetzten Wicklungssinns in Mittelpunktsschaltung aufgebaut ist, daß der Mittelpunkt der beiden Wicklungen (W1, W2) über die Reihenschaltung aus der Induktivität (L) und der Stromquelle (Q) an einer Versorgungsspannung (U) liegt, daß der freie Anschluß (B1) der einen Wicklung (W1) über einen ersten steuerbaren Schalter (S1) und der freie Anschluß (B2) der anderen Wicklung (W2) über einen zweiten steuerbaren Schalter (S2) auf Bezugspotential liegt und daß der Steuereingang des ersten steuerbaren Schalters (S1) mit dem ersten Ausgang (A1) und der Steuereingang des zweiten steuerbaren Schalters (S2) mit dem zweiten Ausgang (A2) einer Ansteuerschaltung (AS) verbunden ist.

2. Schaltungsanordnung nach Anspruch 1, **dadurch gekennzeichnet,** daß der freie Anschluß (B1) der einen Wicklung (W1) über eine erste Diode (D1) und eine dazu in Reihe geschaltete Parallelschaltung aus einer Kapazität (C) und einer Zener-Diode (Z) auf Bezugspotential liegt und daß der freie Anschluß (B2) der anderen Wicklung (W2) über eine zweite Diode (D2) und die Parallelschaltung aus der Kapazität (C) und der Zener-Diode (Z) auf Bezugspotential liegt.

3. Schaltungsanordnung nach Anspruch 1 oder 2, **dadurch gekennzeichnet,** daß die Schaltungsanordnung zur Umkehrung der Magnetisierungsrichtung der magnetischen Schicht eines magnetischen Aufzeichnungsträgers dient, daß beim Aufzeichnen von digitalen Daten die beiden steuerbaren Schalter (S1, S2) von der Ansteuerschaltung (AS) in Abhängigkeit vom aufzuzeichnenden Bit gegenphasig geöffnet und geschlossen werden.

4. Schaltungsanordnung nach Anspruch 3, **dadurch gekennzeichnet,** daß als magnetischer Aufzeichnungsträger eine magneto-optische Platte vorgesehen ist.

5. Schaltungsanordnung nach Anspruch 1, 2, 3 oder 4, **dadurch gekennzeichnet,** daß der Wert der Induktivität (L) größer gewählt ist als die Induktivität der beiden Wicklungen (W1, W2).

## Claims

1. A circuit arrangement for magnetic or magneto-optical recording of data onto a data carrier with a series circuit of an inductance (L) and a current source (Q), **characterised in that,** a coil (S) is constructed as a centre point circuit of two windings (W1, W2) having opposed sense of winding, that the centre point of the two windings (W1, W2) is connected via the series circuit consisting of the inductance (L) and the current source (Q) to a supply voltage (U), that the free terminal (B1) of the one winding (W1) is connected via a first controllable switch (S1) and the free terminal (B2) of the other winding (W2) via a second controllable switch (S2) to reference potential and that the control input of the first controllable switch (S1) is connected to the first output (A1) and the control input of the second controllable switch (S2) with the second output (A2) of a control circuit (AS).

2. A circuit arrangement according to claim 1, **characterised in that** the free terminal (B1) of the one winding (W1) is connected to reference potential via a first diode (D1) and a parallel circuit connected in series therewith and consisting of a capacity (C) and a Zener-diode (Z) and that the free terminal (B2) of the other winding (W2) is connected to re-ference potential via a second diode (D2) and the parallel circuit consisting of the capacity (C) and the Zener-diode (Z).

3. A circuit arrangement according to claim 1 or 2, **characterised in that** the circuit arrangement serves for the reversal of the direction of magnetisation of the magnetic layer of a magnetic recording medium, that during recording of digital data the two controllable switches (S1, S2) are opened and closed with opposed phase by the control circuit (AS) in dependence on the bit to be recorded.

4. A circuit arrangement according to claim 3, **characterised in that** a magneto-optical disc is provided as magnetic recording medium.

5. A circuit arrangement according to claim 1, 2, 3 or 4, **characterised in that** the value of the inductance (L) is selected to be greater than the inductance of the two windings (W1, W2).

## Revendications

1. Circuit destiné à l'enregistrement magnétique ou magnéto-optique de données sur un support de données comprenant un montage série constitué d'une inductance (L) et d'une source de courant (Q), **caractérisé par** **le fait** qu'une bobine (S) est constituée de deux enroulements (W1, W2) de sens opposé avec prise médiane, que la prise médiane des deux enroulements (W1, W2) est connecté à une tension d'alimentation (U) par le montage série constitué de l'inductance (L) et de la source de courant (Q), que l'extrémité libre (B1) de l'un des enroulements (W1) est reliée au potentiel de référence par un premier commutateur commandé (S1) et l'extrémité libre (B2) de l'autre enroulement (W2) par un second commutateur commandé (S2) et que l'entrée de commande du premier commutateur commandé (S1) est raccordée à la première sortie (A1) et l'entrée de commande du second commutateur commandé (S2) à la seconde sortie (A2) d'un circuit de commande (AS).

2. Circuit selon la revendication 1, **caractérisé par le fait** que l'extrémité libre (B1) de l'un des enroulements (W1) est relié au potentiel de référence via une première diode (D1) en série avec un montage en parallèle constitué d'une capacité (C) et d'une diode Zener (Z) et que l'extrémité libre (B2) de l'autre enroulement (W2) est relié au potentiel de référence via une seconde diode (D2) en série avec le montage en parallèle constitué de la capacité (C) et de la diode Zener (Z).

3. Circuit selon la revendication 1 ou 2, **caractérisé par le fait** que le montage sert à inverser le sens de l'aimantation de la couche magnétique d'un support d'enregistrement magnétique et que lors de l'enregistrement de données numériques, les deux commutateurs commandés (S1, S2) sont ouverts et fermés en opposition de phase par le circuit de commande (AS) en fonction du bit à enregistrer.

4. Circuit selon la revendication 3, **caractérisé par le fait** qu'un enregistrement magnéto-optique est prévu comme support d'enregistrement magnétique.

5. Circuit selon la revendication 1, 2, 3 ou 4, **caractérisé par le fait** que la valeur de l'inductance (L) est choisie plus grande que l'inductance des deux enroulements (W1, W2).
